# EUROPÄISCHE PATENTSCHRIFT

(11) **EP 2 411 174 B1**
(45) Veröffentlichungstag und Bekanntmachung des Hinweises auf die Patenterteilung: **18.05.2016**
(21) Anmeldenummer: 10709841.0
(22) Anmeldetag: 22.03.2010
(51) Int. Cl.: B29L 31/18, C22C 1/04, B22F 5/10, B22F 3/105, B29C 67/00, H01F 1/01

(54) **DRUCKVERFAHREN ZUR HERSTELLUNG VON THERMOMAGNETISCHEN FORMKOERPERN FÜR WAERMETAUSCHER**
PRINTING PROCESS FOR THE MANUFACTURE OF THERMOMAGNETIC COMPONENTS FOR A HEAT EXCHANGER
PROCÉDÉ D'IMPRESSION POUR LA FABRICATION DE COMPOSANTES THERMOMAGNÉTIQUES POUR UN ÉCHANGEUR DE CHALEUR

(30) Priorität: 24.03.2009 EP 09156046
(43) Veröffentlichungstag der Anmeldung: 01.02.2012
(73) Patentinhaber: BASF SE, 67056 Ludwigshafen am Rhein (DE)
(72) Erfinder: SEELER, Fabian, 69221 Dossenheim (DE); DEGEN, Georg, 64653 Lorsch (DE); REESINK, Bernard Hendrik, 7107 AD Winterswijk-Kotten (DE); KACZUN, Juergen, 67157 Wachenheim (DE)
(74) Vertreter: BASF IP Association
(86) Internationale Anmeldenummer: PCT/EP2010/053684
(87) Internationale Veröffentlichungsnummer: WO 2010/108883

(56) Entgegenhaltungen:
- EP-A2- 0 431 924
- WO-A1-2006/074790
- JP-A- 2007 291 437
- Z-Corporation: "The fastest, most affordable color 3D printing"[Online] 2009, XP002596768 Burlington,MA (US) ZPrinter Brochure Gefunden im Internet: URL:http://www.zcorp.com/documents/679_ZPr interBrochure%20FINAL.pdf> [gefunden am 2010-08-17]

## Beschreibung

Die Erfindung betrifft Druckverfahren zur Herstellung von thermomagnetischen Formkörpern für Wärmetauscher. Auch offenbart werden die entsprechenden Formkörper und ihr Einsatz in Kühlschränken, Klimaanlagen, Wärmepumpen oder in der Stromerzeugung durch direkte Umwandlung von Wärme.

Thermomagnetische Materialien, auch als magnetokalorische Materialien bezeichnet, können zur Kühlung, beispielsweise in Kühlschränken oder Klimaanlagen, in Wärmepumpen oder zur direkten Gewinnung von Strom aus Wärme ohne Zwischenschaltung einer Umwandlung in mechanische Energie eingesetzt werden.

Derartige Materialien sind prinzipiell bekannt und beispielsweise in WO 2004/068512 beschrieben. Die magnetischen Kühlungstechniken basieren auf dem magnetokalorischen Effekt (MCE) und können eine Alternative zu den bekannten Dampf-Kreislauf-Kühlverfahren darstellen. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt wird oder entfernt wird, gehen die magnetischen Momente wieder in eine Zufallsanordnung über, was zu einem Abkühlen des Materials unter Umgebungstemperatur führt. Dieser Effekt kann zu Kühlzwecken ausgenutzt werden, siehe auch Nature, Vol. 415, 10. Januar 2002, Seiten 150 bis 152. Typischerweise wird ein Wärmetransfermedium wie Wasser zur Wärmeabfuhr aus dem magnetokalorischen Material eingesetzt.

Die in thermomagnetischen Generatoren eingesetzten Materialien basieren ebenfalls auf dem magnetokalorischen Effekt. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt oder entfernt wird, gehen die magnetischen Momente wieder in eine Zufallsanordnung über, was zu einem Abkühlen des Materials unter Umgebungstemperatur führt. Dieser Effekt kann einerseits zu Kühlzwecken ausgenutzt werden, andererseits, um Wärme in elektrische Energie umzuwandeln.

Die magnetokalorische Erzeugung von elektrischer Energie ist verbunden mit der magnetischen Heizung und Kühlung. In den Zeiten der ersten Konzipierung wurde das Verfahren zur Energieerzeugung als pyromagnetische Energieerzeugung beschrieben. Verglichen mit Vorrichtungen der Peltier- oder Seebeck-Typs können diese magnetokalorischen Vorrichtungen eine wesentlich höhere Energieeffizienz aufweisen.

Die Forschung zu diesem physikalischen Phänomen begann im späten 19. Jahrhundert, als zwei Wissenschaftler, Tesla und Edison, pyromagnetische Generatoren zum Patent anmeldeten. Im Jahr 1984 beschrieb Kirol zahlreiche mögliche Anwendungen und führte thermodynamische Analysen davon durch. Damals wurde Gadolinium als ein potentielles Material für Anwendungen nahe Raumtemperatur angesehen.

Ein pyromagneto-elektrischer Generator ist beispielsweise von N. Tesla in US 428,057 beschrieben. Es ist angegeben, dass die magnetischen Eigenschaften von Eisen oder anderen magnetischen Substanzen teilweise oder ganz zerstört werden können oder verschwinden können durch Erhitzen auf eine bestimmte Temperatur. Beim Abkühlen werden die magnetischen Eigenschaften wiederhergestellt und kehren in den Ausgangszustand zurück. Dieser Effekt kann ausgenutzt werden, um elektrischen Strom zu erzeugen. Wird ein elektrischer Leiter einem variierenden Magnetfeld ausgesetzt, führen die Veränderungen des Magnetfelds zur Induzierung eines elektrischen Stroms im Leiter. Wird beispielsweise das magnetische Material von einer Spule umschlossen und sodann in einem permanenten Magnetfeld erhitzt und nachfolgend abgekühlt, so wird jeweils beim Aufwärmen und Abkühlen ein elektrischer Strom in der Spule induziert. Hierdurch kann Wärmeenergie in elektrische Energie umgewandelt werden, ohne dass zwischenzeitlich eine Umwandlung in mechanischer Arbeit erfolgt. In dem von Tesla beschriebenen Verfahren wird Eisen als magnetische Substanz über einen Ofen oder eine geschlossene Feuerstelle erhitzt und nachfolgend wieder abgekühlt.

Für die thermomagnetischen oder magnetokalorischen Anwendungen sollte das Material einen effizienten Wärmeaustausch zulassen, um hohe Wirkungsgrade erreichen zu können. Sowohl bei der Kühlung als auch bei der Stromerzeugung wird das thermomagnetische Material in einem Wärmetauscher eingesetzt.

Die prioritätsältere, nicht vorveröffentlichte europäische Patentanmeldung mit dem Aktenzeichen EP 08155255.6, eingereicht am 28. April 2008 mit dem Titel "Offenzelliger, poröser Formkörper für Wärmetauscher" beschreibt die Herstellung von Wärmetauscher-Formkörpern aus thermomagnetischen Materialien durch Einbringen des thermomagnetischen Pulvers in ein geeignetes organisches Bindemittel und Füllen in eine Form. Das Füllen kann beispielsweise durch Gießen oder Spritzgießen erfolgen. So-dann wird das Polymer katalytisch oder thermisch entfernt und soweit gesintert, dass ein poröser Körper mit offenzelliger Struktur gebildet wird.

WO 2006/074790 offenbart ein Verfahren zur Herstellung eines magnetischen Regenerators umfassend das Formen eines magnetischen Regenerators aus einem Schlicker oder einer Paste enthaltend ein magnetokalorisches Material, wobei der magnetische Regenerator eine Vielzahl durchgehender Pfade für den Fluss eines Wärmeträgerfluids aufweist, und Variieren der Zusammensetzung des magnetokalorisches Materials, so dass die magnetische Übergangstemperatur des magnetischen Regenerators entlang dieser Pfade variiert.

Aufgabe der vorliegenden Erfindung ist die Bereitstellung eines Verfahrens zur Herstellung von thermomagnetischen Formkörpern, die zum Einsatz in Wärmetauschern, insbesondere für Kühlzwecke oder zur Stromerzeugung, geeignet sind. Dabei sollen die Formkörper eine hohe Wärmeübertragung erlauben, einen geringen Durchflusswiderstand für Wärmetauschermedien aufweisen und eine hohe magnetokalorische Dichte besitzen.

Die Aufgabe wird erfindungsgemäß gelöst durch ein Verfahren wie in den Ansprüchen definiert zur Herstellung von Formkörpern für Wärmetauscher, enthaltend ein thermomagnetisches Material, das ausgewählt ist aus
(1) Verbindungen der allgemeinen Formel (I)

   (A_{y}B_{1-y})_{2+δ}C_{w}DₓE_{z} (I)

   mit der Bedeutung
   - A: Mn oder Co,
   - B: Fe, Cr oder Ni,
   - C, D, E: mindestens zwei von C, D, E sind voneinander verschieden, haben eine nicht-verschwindende Konzentration und sind ausgewählt aus P, B, Se, Ge, Ga, Si, Sn, N, As und Sb,
   - δ: Zahl im Bereich von - 0,2 bis 0,2
   - w, x, y, z: Zahlen im Bereich von 0 bis 1, wobei w + x + z = 1 ist;
(2) auf La und Fe basierenden Verbindungen der allgemeinen Formeln (II) und/oder (III) und/oder (IV)

   La(FeₓAl₁₋ₓ)₁₃H_{y} oder La(FeₓSi₁₋ₓ)₁₃H_{y} (II)

   mit
   - x: Zahl von 0,7 bis 0,95
   - y: Zahl von 0 bis 3;

   La(FeₓAl_{y}Co_{z})₁₃ oder La(FeₓSi_{y}Co_{z})₁₃ (III)

   mit
   - x: Zahl von 0,7 bis 0,95
   - y: Zahl von 0,05 bis 1 - x
   - z: Zahl von 0,005 bis 0,5;

   LaMnₓFe₂₋ₓGe (IV)

   mit
   x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5,
(4) auf Gd und Si basierenden Verbindungen der allgemeinen Formel (V)

   Gd₅(SiₓGe₁₋ₓ)₄ (V)

   mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)

   Tb₅(Si₄₋ₓGeₓ) (VI)

   mit x = 0,1 ,2 ,3, 4

   XTiGe (VII)

   mit X = Dy, Ho, Tm,
(8) auf Mn und Sb oder As basierenden Verbindungen der allgemeinen Formeln (VI-II) und (IX)

   Mn₂₋ₓZₓSb (VIII)

   Mn₂ZₓSb₁₋ₓ (IX)

   mit
   - Z: Cr, Cu, Zn, Co, V, As, Ge,
   - x: 0,01 bis 0,5,
   wobei Sb durch As ersetzt sein kann, sofern Z nicht As ist, wobei die Formkörper Kanäle zum Durchleiten eines fluiden Wärmetauschermediums aufweisen, dadurch gekennzeichnet, dass man ein Pulver des thermomagnetischen Materials in ein Bindemittel einbringt, die resultierende Formmasse durch Rapid-Prototyping/3D-Druck auf einen Träger aufbringt und das Bindemittel und gegebenenfalls den Träger nachfolgend entfernt und den resultierenden Grünkörper sintert und mehrere unterschiedliche thermomagnetische Materialien nebeneinander und/oder übereinander gedruckt werden, so dass unterschiedliche thermomagnetische Materialien, die einen magnetokalorischen Effekt bei unterschiedlichen Temperaturen zeigen, im selben Formkörper vorliegen, wobei die räumliche Anordnung der unterschiedlichen thermomagnetischen Materialien entlang zumindest einer Raumachse so erfolgt, dass sich entlang dieser mindestens einen Raumachse ein quasi-kontinuierlicher Anstieg oder Abfall der Temperatur ergibt, bei der jeweils der magnetokalorische Effekt auftritt.

Es wurde erfindungsgemäß gefunden, dass in den Ansprüchen definierte Druckverfahren in besonderer Weise zur Herstellung von Formkörpern für Wärmetauscher auf Basis thermomagnetischer Materialien geeignet sind. Durch diese Druckverfahren lässt sich zum einen eine Feinstrukturierung von Kanälen im Wärmetauscher erreichen, zum anderen können unterschiedliche thermomagnetische Materialien kombiniert werden, um den magnetokalorischen Effekt in einem breiten Temperaturbereich nutzen zu können.

Für einen wirksamen Einsatz der thermomagnetischen Materialien ist eine Feinstrukturierung des spröden Materials im Wärmetauscher wichtig. Dieses Problem wird erfindungsgemäß wie in den Ansprüchen definiert gelöst durch das Drucken von Formmassen, die Pulver des thermomagnetischen Materials in einem Bindemittel aufweisen, um so sehr fein strukturierte Kanäle für Wärmetauscherfluide herzustellen.

Im Druckverfahren werden eine oder mehrere Schichten der Formmasse auf einen geeigneten Träger gedruckt. Hierdurch können in einfacher und kostengünstiger Weise nahezu beliebig geformte thermomagnetische Materialien zugänglich gemacht werden, die ein hohes Oberflächen-zu-Volumen-Verhältnis und eine optimierte Feinstruktur für einen effizienten Wärmeübergang zeigen.

Die erfindungsgemäß eingesetzten Formmassen weisen zum einen ein Pulver des thermomagnetischen Materials auf. Dieses Pulver hat vorzugsweise eine mittlere Teilchengröße im Bereich von 0,1 bis 100 µm, besonders bevorzugt 0,5 bis 30 µm. Die mittlere Teilchengröße wird dabei beispielsweise durch Klassierung oder Auszählung/Mikroskopie bestimmt.

Das Pulver des thermomagnetischen Materials wird in ein Bindemittel eingebracht, das eine feine Verteilung des thermomagnetischen Materialpulvers im Bindemittel erlaubt. Es kann ein beliebiges geeignetes Bindemittel eingesetzt werden, in aller Regel handelt es sich jedoch um ein polymeres Bindemittel. Neben dem Bindemittel kann, wenn gewünscht, zusätzlich ein Lösungs- oder Dispergiermittel eingesetzt werden, um die Fließfähigkeit und die mechanischen Eigenschaften der Formmasse an das jeweilige Druckverfahren anzupassen. Die Formmasse kann beispielsweise eine thermoplastische Formmasse sein. Die Formmasse wird mit der gewünschten Form auf einen geeigneten, beispielsweise polymeren Träger gedruckt. Dieser Träger, der mit dem thermomagnetischen Material beschichtet ist, kann dann direkt beispielsweise in einer magnetischen Kühlvorrichtung oder für die Wärmeumwandlung eingesetzt werden. Es ist auch möglich und häufig bevorzugt, nach dem Drucken das Bindemittel zu entfernen und den resultierenden Grünkörper zu sintern. Dabei kann vor, bei oder nach der Bindemittelentfernung bzw. vor, bei oder nach dem Sintern der Träger, falls gewünscht, ebenfalls entfernt werden.

Wenn unterschiedliche thermomagnetische Materialien mit unterschiedlichen Curie-Temperaturen entweder nebeneinander oder übereinander auf den Träger gedruckt werden, kann der Temperaturbereich, in dem der Wärmetauscher arbeitet, erweitert werden. Alternativ kann die Formmasse mehr als ein thermomagnetisches Material enthalten. Die Formmassen können auch so gedruckt werden, dass die Konzentrationen der unterschiedlichen Materialien in der gedruckten Form, beispielsweise entlang einer oder zwei Achsen einer bedruckten Fläche, variieren, so dass ein kontinuierlicher Übergang von einem thermomagnetischen Material zum nächsten möglich ist.

Die Formmasse kann dabei zusätzliche Additive zur Verbesserung der mechanischen Eigenschaften, der Korrosionsbeständigkeit und/oder der Leitfähigkeit enthalten. Die Additive können den jeweiligen Anforderungen an den Wärmetauscher angepasst werden.

Das Bindemittel kann beim Sintern thermisch entfernt werden, ebenso der Träger. Auch eine Entfernung durch chemische Umsetzung ist möglich.

Es wurde gefunden, dass die erfindungsgemäß hergestellten Wärmetauscher mit den thermomagnetischen Materialien vorteilhaft in Wärmetauschern, der magnetischen Kühlung, Wärmepumpen oder thermomagnetischen Generatoren oder Regeneratoren eingesetzt werden können.

Der Formkörper weist bevorzugt durchgehende Kanäle auf. Dies erlaubt den Durchfluss eines fluiden, vorzugsweise flüssigen Wärmeträgermediums wie Wasser, Wasser/Alkohol-Gemische, Wasser/Salz-Gemische oder Gase wie Luft oder Edelgase. Bevorzugt werden Wasser oder Wasser/Alkohol-Gemische eingesetzt, wobei der Alkohol ein ein- oder mehrwertiger Alkohol sein kann. Beispielsweise kann es sich um Glykole handeln.

Der Anteil durchgehender Kanäle kann nach den praktischen Erfordernissen eingestellt werden. Die Zahl und der Durchmesser der Kanäle sollten ausreichend hoch sein, so dass eine schnelle Wärmeabfuhr durch ein fluides Wärmeübertragungsmedium erreicht werden kann. Bei einer schnellen Wärmeabfuhr kann das Material mit hoher Frequenz in das Magnetfeld eingebracht oder aus ihm wieder entfernt werden. In diesem Fall ist die "Porosität" hoch. Um eine große Wärmemenge austauschen zu können ist eine große Materialmenge und damit eine niedrige "Porosität" notwendig. Bei einer niedrigen "Porosität" kann eine große Materialmenge in das Magnetfeld eingebracht werden, und viel Wärme kann übertragen werden. Der Wärmeaustausch über ein Wärmeträgermedium kann hierdurch jedoch beeinträchtigt werden. Im Ergebnis kann die "Porosität" nach den jeweiligen Anforderungen frei gewählt werden, auch in Übereinstimmung mit dem eingesetzten thermomagnetischen Material.

Gemäß einer Ausführungsform der Erfindung weist der Formkörper daher eine geringe bis mittlere Porosität" von vorzugsweise 30 bis 60 % besonders bevorzugt 30 bis 50 % auf. Gemäß einer weiteren Ausführungsform weist ein "hochporöser" Formkörper eine "Porosität" von vorzugsweise 60 bis 95 %, insbesondere 80 bis 95 %, auf.

Die "Porosität" ist dabei jeweils auf das Volumen bezogen.

Der mittlere Kanaldurchmesser beträgt allgemein 0,1 bis 2000 µm, vorzugsweise 0,1 bis 300 µm, besonders bevorzugt 0,3 bis 200 µm. Auch der mittlere Kanaldurchmesser kann nach den jeweiligen Anforderungen eingestellt werden.

Das Volumen der Strömungskanäle, bezogen auf das Gesamtvolumen des Formkörpers, liegt vorzugsweise im Bereich von 10 bis 80 %, insbesondere im Bereich von 30 bis 60 %.

Gemäß einer Ausführungsform weisen die Formkörper ein Verhältnis von Oberfläche zu Volumen von mindestens 250 m²/m³ auf. Gemäß einer speziellen Ausführungsform kann das Verhältnis von Oberfläche zu Volumen auch mindestens 500 m²/m³ betragen. Dabei werden die Oberfläche und das Porenvolumen durch Quecksilberporosimetrie bestimmt, bzw. davon ausgehend berechnet. Auch optische Untersuchungsmethoden können eingesetzt werden. Für strukturierte Packungen lässt sich das Verhältnis auch berechnen. Typische Formkörper weisen Außenmaße im Bereich von 1 bis 10 cm auf, z. B. 1 cm x 1 cm x 5-10 cm.

Die erfindungsgemäß eingesetzten Materialien sind prinzipiell bekannt und zum Teil beispielsweise in WO 2004/068512 beschrieben.

Dabei ist das thermomagnetische Material ausgewählt aus den vorstehenden Verbindungen (1) bis (8).

Besonders bevorzugt sind erfindungsgemäß die thermomagnetischen Materialien ausgewählt aus den Verbindungen (1), (2) und (3) sowie (5).

Erfindungsgemäß besonders geeignete Materialien sind beispielsweise in WO 2004/068512, Rare Metals, Vol. 25, 2006, Seiten 544 bis 549, J. Appl. Phys. 99,08Q107 (2006), Nature, Vol. 415, 10. Januar 2002, Seiten 150 bis 152 und Physica B 327 (2003), Seiten 431 bis 437 beschrieben.

In den vorstehend genannten Verbindungen der allgemeinen Formel (I) sind bevorzugt C, D und E identisch oder unterschiedlich und ausgewählt aus mindestens einem von P, Ge, Si, Sn und Ga.

Das metallbasierte Material der allgemeinen Formel (I) ist vorzugsweise ausgewählt aus mindestens quarternären Verbindungen, die neben Mn, Fe, P und gegebenenfalls Sb zudem Ge oder Si oder As oder Ge und Si, Ge und As oder Si und As oder Ge, Si und As enthalten.

Bevorzugt sind mindestens 90 Gew.-%, besonders bevorzugt mindestens 95 Gew.-% der Komponente A Mn. Bevorzugt sind mindestens 90 Gew.-%, besonders bevorzugt mindestens 95 Gew.-% von B Fe. Bevorzugt sind mindestens 90 Gew.-%, besonders bevorzugt mindestens 95 Gew.-% von C P. Bevorzugt sind mindestens 90 Gew.-%, besonders bevorzugt mindestens 95 Gew.-% von D Ge. Bevorzugt sind mindestens 90 Gew.-%, besonders bevorzugt mindestens 95 Gew.-% von E Si.

Vorzugsweise hat das Material die allgemeine Formel MnFe(P_{w}GeₓSi_{z}).
Bevorzugt ist x eine Zahl im Bereich von 0,3 bis 0,7, w ist kleiner oder gleich 1-x und z entspricht 1-x-w.

Das Material hat vorzugsweise die kristalline hexagonale Fe₂P-Struktur. Beispiele geeigneter Strukturen sind MnFeP_{0,45 bis 0,7}, Ge_{0,55 bis 0,30} und MnFeP_{0,5 bis 0,70}, (Si/Ge)_{0,5 bis 0,30}.

Geeignete Verbindungen sind ferner Mₙ₁₊ₓFe₁₋ₓP_{1-y}Ge_{y} mit x im Bereich von -0,3 bis 0,5, y im Bereich von 0,1 bis 0,6. Ebenfalls geeignet sind Verbindungen der allgemeinen Formel Mn₁₊ₓFe₁₋ₓP_{1-y}Ge_{y-z}Sb_{z} mit x im Bereich von -0,3 bis 0,5, y im Bereich von 0,1 bis 0,6 und z kleiner als y und kleiner als 0,2. Ferner sind Verbindungen der Formel Mn₁₊ₓFe₁₋ₓP_{1-y}Ge_{y-z}Si_{z} geeignet mit x Zahl im Bereich von 0,3 bis 0,5, y im Bereich von 0,1 bis 0,66, z kleiner oder gleich y und kleiner als 0,6.

Geeignet sind ferner weitere Fe₂P-basierte Verbindungen ausgehend von Fe₂P und FeAs₂, gegebenenfalls Mn und P. Sie entsprechen beispielsweise den allgemeinen Formeln MnFe₁₋ₓCoₓGe, mit x = 0,7 - 0,9, Mn₅₋ₓFeₓSi₃ mit x = 0 - 5, Mn₅Ge₃₋ₓSiₓ mit x = 0,1 - 2, Mn₅Ge₃₋ₓSbₓ mit x = 0 - 0,3, Mn₂₋ₓFeₓGe₂ mit x = 0,1 - 0,2, (Fe₁₋ₓMnₓ)₃C Mn₃₋ₓCoₓGaC mit x = 0 - 0,05.

Bevorzugte auf La und Fe basierende Verbindungen der allgemeinen Formeln (II) und/oder (III) und/oder (IV) sind La(Fe_{0,90}Si_{0,10})₁₃, La(Fe_{0,89}Si_{0,11})₁₃, La(Fe_{0,880}Si_{0,120})₁₃, La(Fe_{0,877}Si_{0,123})₁₃. LaFe_{11,8}Si_{1,2}, La(Fe_{0,88}Si_{0,12})₁₃H_{0,5}, La(Fe_{0,88}Si_{0,12})₁₃H_{1,0}, LaFe_{11,7}Si_{1,3}H_{1,1}, LaFe_{11,57}Si_{1,43}H_{1,3}, La(Fe_{0,88}Si_{0,12})H_{1,5}, LaFe_{11,2}Co_{0,7}Si_{1,1}, LaFe_{11,5}Al_{1,5}C_{0,1}, LaFe_{11,5}Al_{1,5}C_{0,2}, LaFe_{11,5}Al_{1,5}C_{0,4}, LaFe_{11,5}Al_{1,5}Co_{0,5}, La(Fe_{0,94}Co_{0,06})_{11,83}Al_{1,17}, La(Fe_{0,92}Co_{0,08})_{11,83}Al_{1,17}.

Geeignete Mangan enthaltende Verbindungen sind MnFeGe, MnFe_{0,9}Co_{0,1}Ge, MnFe_{0,8}Co_{0,2}Ge, MnFe_{0,7}Co_{0,3}Ge, MnFe_{0,6}Co_{0,4}Ge, MnFe_{0,5}Co_{0,5}Ge, MnFe_{0,4}Co_{0,6}Ge, MnFe_{0,3}Co_{0,7}Ge, MnFe_{0,2}Co_{0,8}Ge, MnFe_{0,15}Co_{0,85}Ge, MnFe_{0,1}Co_{0,9}Ge, MnCoGe, Mn₅Ge_{2,5}Si_{0,5}, Mn₅Ge₂Si, Mn₅Ge_{1,5}Si_{1,5}, Mn₅GeSi₂, Mn₅Ge₃, Mn₅Ge_{2,9}Si_{0,1}, Mn₅Ge_{2,8}Sb_{0,2}, Mn₅Ge_{2,7}Sb_{0,3}, LaMn_{1,9}Fe_{0,1}Ge, LaMn_{1,85}Fe_{0,15}Ge, LaMn_{1,8}Fe_{0,2}Ge, (Fe_{0,9}Mn_{0,1})₃C, (Fe_{0,8}Mn_{0,2})₃C, (Fe_{0,7}Mn_{0,3})₃C, Mn₃GaC, MnAs, (Mn, Fe)As, Mn_{1+δ}As_{0,8}Sb_{0,2}, MnAs_{0,75}Sb_{0,25}, Mn_{1,1}As_{0,75}Sb_{0,25}, Mn_{1,5}As_{0,75}Sb_{0,25},

Erfindungsgemäß geeignete Heusler-Legierungen sind beispielsweise Ni₂MnGa, Fe₂MnSi₁₋ₓGeₓ mit x = 0 - 1 wie Fe₂MnSi_{0,5}Ge_{0,5}, Ni_{52,9}Mn_{22,4}Ga_{24,7}, Ni_{50,9}Mn_{24,7}Ga_{24,4}, Ni_{55,2}Mn_{18,6}Ga_{26,2}, Ni_{51,6}Mn_{24,7}Ga_{23,8}, Ni_{52,7}Mn_{23,9}Ga_{23,4}, CoMnSb, CoNb_{0,2}Mn_{0,8}Sb, CoNb_{0,4}Mn_{0,6}SB, CoNb_{0,6}Mn_{0,4}SB, Ni₅₀Mn₃₅Sn₁₅, Ni₅₀Mn₃₇Sn₁₃, MnFeP_{0,45}As_{0,55}, MnFeP_{0,47}As_{0,53}, Mn_{1,1}Fe_{0,9}P_{0,47}As_{0,53}, MnFeP_{0,89-x}SiₓGe_{0,11}, X = 0,22, X = 0,26, X = 0,30, X = 0,33.

Weiterhin geeignet sind Fe₉₀Zr₁₀, Fe₈₂Mn₈Zr₁₀, Co₆₆Nb₉Cu₁Si₁₂B₁₂, Pd₄₀Ni_{22,5}Fe_{17.5}P₂₀, FeMoSiBCuNb, Gd₇₀Fe₃₀, GdNiAl, NdFe₁₂B₆GdMn₂.

Manganite des Perovskit-Typs sind beispielsweise La_{0,6}Ca_{0,4}MnO₃, La_{0,67}Ca_{0,33}MnO₃, La_{0,8}Ca_{0,2}MnO₃, La_{0,7}Ca_{0,3}MnO₃, La_{0,958}Li_{0,025}Ti_{0,1}Mn_{0,9}O₃, La_{0,65}Ca_{0,35}Ti_{0,1}Mn_{0,9}O₃, La_{0,799}Na_{0,199}MnO_{2,97}, La_{0,88}Na_{0,099}Mn_{0,977}O₃, La_{0,877}K_{0,096}Mn_{0,974}O₃, La_{0,65}Sr_{0,35}Mn_{0,95}Cn_{0,05}O₃, La_{0,7}Nd_{0,1}Na_{0,2}MnO₃, La_{0,5}Ca_{0,3}Sr_{0,2}MnO₃.

Auf Gd und Si basierende Verbindungen der allgemeinen Formel (V)

Gd₅(SiₓGe₁₋ₓ)₄

mit x Zahl von 0,2 bis 1
sind beispielsweise Gd₅(Si_{0,5}Ge_{0,5})₄, Gd₅(Si_{0,425}Ge_{0,575})₄, Gd₅(Si_{0,45}Ge_{0,55})₄, Gd₅(Si_{0,365}Ge_{0,635})₄, Gd₅(Si_{0,3}Ge_{0,7})₄, Gd₅(Si_{0,25}Ge_{0,75})₄.

Seltenerden-Elemente enthaltende Verbindungen sind Tb₅(Si₄₋ₓGeₓ) mit x = 0, 1, 2, 3, 4 oder XTiGe mit X = Dy, Ho, Tm, beispielsweise Tb₅Si₄, Tb₅(Si₃Ge), Tb(Si₂Ge₂), Tb₅Ge₄, DyTiGe, HoTiGe, TmTiGe.

Auf Mn und Sb oder As basierende Verbindungen der allgemeinen Formeln (VIII) und (IX) haben bevorzugt die Bedeutungen z = 0,05 bis 0,3, Z = Cr, Cu, Ge, As, Co.

Die erfindungsgemäß eingesetzten thermomagnetischen Materialien können in beliebiger geeigneter Weise hergestellt werden.

Die Herstellung der thermomagnetischen Materialien erfolgt beispielsweise durch Festphasenumsetzung der Ausgangselemente oder Ausgangslegierungen für das Material in einer Kugelmühle, nachfolgendes Verpressen, Sintern und Tempern unter I-nertgasatmosphäre und nachfolgendes langsames Abkühlen auf Raumtemperatur. Ein derartiges Verfahren ist beispielsweise in J. Appl. Phys. 99, 2006, 08Q107 beschrieben.

Auch eine Verarbeitung über das Schmelzspinnen ist möglich. Hierdurch ist eine homogenere Elementverteilung möglich, die zu einem verbesserten magnetokalorischen Effekt führt, vergleiche Rare Metals, Vol. 25, Oktober 2006, Seiten 544 bis 549. In dem dort beschriebenen Verfahren werden zunächst die Ausgangselemente in einer Argongasatmosphäre induktionsgeschmolzen und sodann in geschmolzenem Zustand über eine Düse auf eine sich drehende Kupferwalze gesprüht. Es folgt ein Sintern bei 1000 °C und ein langsames Abkühlen auf Raumtemperatur.

Ferner kann für die Herstellung auf WO 2004/068512 verwiesen werden.

Die nach diesen Verfahren erhaltenen Materialien zeigen häufig eine große thermische Hysterese. Beispielsweise werden in Verbindungen des Fe₂P-Typs, die mit Germanium oder Silicium substituiert sind, große Werte für die thermische Hysterese in einem großen Bereich von 10 K oder mehr beobachtet.

Bevorzugt ist daher ein Verfahren zur Herstellung der thermomagnetischen Materialien, umfassend die folgenden Schritte:
a) Umsetzung von chemischen Elementen und/oder Legierungen in einer Stöchiometrie, die dem metallbasierten Material entspricht, in der Fest- und/oder Flüssigphase,
b) gegebenenfalls Überführen des Umsetzungsproduktes aus Stufe a) in einen Festkörper,
c) Sintern und/oder Tempern des Festkörpers aus Stufe a) oder b),
d) Abschrecken des gesinterten und/oder getemperten Festkörpers aus Stufe c) mit einer Abkühlgeschwindigkeit von mindestens 100 K/s.

Die thermische Hysterese kann signifikant vermindert werden und ein großer magnetokalorischer Effekt kann erreicht werden, wenn die metallbasierten Materialien nach dem Sintern und/oder Tempern nicht langsam auf Umgebungstemperatur abgekühlt werden, sondern mit einer hohen Abkühlgeschwindigkeit abgeschreckt werden. Dabei beträgt die Abkühlgeschwindigkeit mindestens 100 K/s. Bevorzugt beträgt die Abkühlgeschwindigkeit 100 bis 10000 K/s, besonders bevorzugt 200 bis 1300 K/s. Speziell bevorzugt sind Abkühlgeschwindigkeiten von 300 bis 1000 K/s.

Das Abschrecken kann dabei durch beliebige geeignete Kühlverfahren erreicht werden, beispielsweise durch Abschrecken des Festkörpers mit Wasser oder wasserhaltigen Flüssigkeiten, beispielsweise gekühltem Wasser oder Eis/Wasser-Mischungen. Die Festkörper können beispielsweise in eisgekühltes Wasser fallengelassen werden. Es ist ferner möglich, die Festkörper mit untergekühlten Gasen wie flüssigem Stickstoff abzuschrecken. Weitere Verfahren zum Abschrecken sind dem Fachmann bekannt. Vorteilhaft ist dabei ein kontrolliertes und schnelles Abkühlen.

Die übrige Herstellung der thermomagnetischen Materialien ist weniger kritisch, solange im letzten Schritt das Abschrecken des gesinterten und/oder getemperten Festkörpers mit der angegebenen Abkühlgeschwindigkeit erfolgt. Das Verfahren kann dabei auf die Herstellung beliebiger geeigneter thermomagnetischer Materialien für die magnetische Kühlung angewendet werden, wie sie vorstehend beschreiben sind.

In Schritt (a) des Verfahrens erfolgt die Umsetzung der Elemente und/oder Legierungen, die im späteren thermomagnetischen Material enthalten sind, in einer Stöchiometrie, die dem thermomagnetischen Material entspricht, in der Fest- oder Flüssigphase.

Vorzugsweise wird die Umsetzung in Stufe a) durch gemeinsames Erhitzen der Elemente und/oder Legierungen in einem geschlossenen Behältnis oder in einem Extruder, oder durch Festphasenumsetzung in einer Kugelmühle erfolgen. Besonders bevorzugt wird eine Festphasenumsetzung durchgeführt, die insbesondere in einer Kugelmühle erfolgt. Eine derartige Umsetzung ist prinzipiell bekannt, vergleiche die vorstehend aufgeführten Schriften. Dabei werden typischerweise Pulver der einzelnen Elemente oder Pulver von Legierungen aus zwei oder mehr der einzelnen Elemente, die im späteren thermomagnetischen Material vorliegen, in geeigneten Gewichtsanteilen pulverförmig vermischt. Falls notwendig, kann zusätzlich ein Mahlen des Gemisches erfolgen, um ein mikrokristallines Pulvergemisch zu erhalten. Dieses Pulvergemisch wird vorzugsweise in einer Kugelmühle aufgeheizt, was zu einer weiteren Verkleinerung wie auch guten Durchmischung und zu einer Festphasenreaktion im Pulvergemisch führt. Alternativ werden die einzelnen Elemente in der gewählten Stöchiometrie als Pulver vermischt und anschließend aufgeschmolzen.

Das gemeinsame Erhitzen in einem geschlossenen Behälter erlaubt die Fixierung flüchtiger Elemente und die Kontrolle der Stöchiometrie. Gerade bei Mitverwendung von Phosphor würde dieser in einem offenen System leicht verdampfen.

An die Umsetzung schließt sich ein Sintern und/oder Tempern des Festkörpers an, wobei ein oder mehrere Zwischenschritte vorgesehen sein können. Beispielsweise kann der in Stufe a) erhaltene Feststoff einer Formgebung unterzogen werden, bevor er gesintert und/oder getempert wird.

Alternativ ist es möglich, den aus der Kugelmühle erhaltenen Feststoff einem Schmelzspinnverfahren zuzuführen. Schmelzspinnverfahren sind an sich bekannt und beispielsweise in Rare Metals, Vol. 25, Oktober 2006, Seiten 544 bis 549 wie auch in WO 2004/068512 beschrieben.

Dabei wird die in Stufe a) erhaltene Zusammensetzung geschmolzen und auf eine sich drehende kalte Metallwalze gesprüht. Dieses Sprühen kann mittels Überdruck vor der Sprühdüse oder Unterdruck hinter der Sprühdüse erreicht werden. Typischerweise wird eine sich drehende Kupfertrommel oder -walze verwendet, die zudem gegebenenfalls gekühlt werden kann. Die Kupfertrommel dreht sich bevorzugt mit einer Oberflächengeschwindigkeit von 10 bis 40 m/s, insbesondere 20 bis 30 m/s. Auf der Kupfertrommel wird die flüssige Zusammensetzung mit einer Geschwindigkeit von vorzugsweise 10² bis 10⁷ K/s abgekühlt, besonders bevorzugt mit einer Geschwindigkeit von mindestens 10⁴ K/s, insbesondere mit einer Geschwindigkeit von 0,5 bis 2 x 10⁶ K/s.

Das Schmelzspinnen kann wie auch die Umsetzung in Stufe a) unter vermindertem Druck oder unter Inertgasatmosphäre durchgeführt werden.

Durch das Meltspinning wird eine hohe Verarbeitungsgeschwindigkeit erreicht, da das nachfolgende Sintern und Tempern verkürzt werden kann. Gerade im technischen Maßstab wird so die Herstellung der thermomagnetischen Materialien wesentlich wirtschaftlicher. Auch die Sprühtrocknung führt zu einer hohen Verarbeitungsgeschwindigkeit. Besonders bevorzugt wird das Schmelzespinnen (Melt spinning) durchgeführt.

Alternativ kann in Stufe b) ein Sprühkühlen durchgeführt werden, bei dem eine Schmelze der Zusammensetzung aus Stufe a) in einen Sprühturm gesprüht wird. Der Sprühturm kann dabei beispielsweise zusätzlich gekühlt werden. In Sprühtürmen werden häufig Abkühlgeschwindigkeiten im Bereich von 10³ bis 10⁵ K/s, insbesondere etwa 10⁴ K/s erreicht.

Das Sintern und/oder Tempern des Festkörpers erfolgt in Stufe c) vorzugsweise zunächst bei einer Temperatur im Bereich von 800 bis 1400 °C zum Sintern und nachfolgend bei einer Temperatur im Bereich von 500 bis 750 °C zum Tempern. Beispielsweise kann dann das Sintern bei einer Temperatur im Bereich von 500 bis 800 °C erfolgen. Für Formkörper/Festkörper erfolgt das Sintern besonders bevorzugt bei einer Temperatur im Bereich von 1000 bis 1300 °C, insbesondere von 1100 bis 1300 °C. Das Tempern kann dann beispielsweise bei 600 bis 700 °C erfolgen.

Das Sintern wird vorzugsweise für einen Zeitraum von 1 bis 50 Stunden, besonders bevorzugt 2 bis 20 Stunden, insbesondere 5 bis 15 Stunden durchgeführt. Das Tempern wird vorzugsweise für eine Zeit im Bereich von 10 bis 100 Stunden, besonders bevorzugt 10 bis 60 Stunden, insbesondere 30 bis 50 Stunden durchgeführt. Die exakten Zeiträume können dabei je nach Material den praktischen Anforderungen angepasst werden.

Bei Einsatz des Schmelzspinnverfahrens kann der Zeitraum für ein Sintern oder Tempern stark verkürzt werden, beispielsweise auf Zeiträume von 5 Minuten bis 5 Stunden, bevorzugt 10 Minuten bis 1 Stunde. Im Vergleich zu den sonst üblichen Werten von 10 Stunden für das Sintern und 50 Stunden für das Tempern resultiert ein extremer Zeitvorteil.

Durch das Sintern/Tempern kommt es zu einem Anschmelzen der Korngrenzen, so dass sich das Material weiter verdichtet.

Durch das Schmelzen und schnelle Abkühlen in Stufe b) kann damit die Zeitdauer für Stufe c) erheblich vermindert werden. Dies ermöglicht auch eine kontinuierliche Herstellung der thermomagnetischen Materialien.

Der erfindungsgemäß hergestellte Formkörper kann beispielsweise in Form einer Platte, Wabe, eines Monolithen oder in Form einer Beschichtung auf einem Träger vorliegen.

Die Herstellung der Formkörper erfolgt durch in den Ansprüchen definierte Druckverfahren. Als weitere Druckverfahren, in denen anstelle von Druckfarben die das thermomagnetische Material enthaltenden Formmassen eingesetzt werden, seien beispielsweise der Siebdruck, Flexdruck und Tiefdruck genannt (Diese Verfahren sind an sich dem Fachmann bekannt) sowie insbesondere zur Ausbildung größerer dreidimensionaler Strukturen der Inkjet-Druck und das Lasertransferverfahren, wie z.B. in EP-A-1485 255 beschrieben. Beim erfindungsgemäßen Rapid-Prototyping/3D-Druck wird zunächst das thermomagnetische Materialpulver in das Bindemittel eingebracht. Vorzugsweise liegen, bezogen auf den Festkörperanteil der resultierenden Formmasse, 50 bis 99 Gew.-%, besonders bevorzugt 60 bis 98 Gew.-% des thermomagnetischen Materials vor. Der verbleibende Anteil verteilt sich auf Bindemittel, gegebenenfalls Löse- oder Dispergiermittel und weitere Additive. Um die Formmasse drucken zu können, muss die Formmasse in einem geeigneten Lösemittel oder einer Lösemittelmischung dispergiert sein. Das Verhältnis von fester Formmasse und Lösemittel hängt dabei vom jeweiligen Druckverfahren ab.

Beim Drucken wird eine lösemittelhaltige Dispersion der thermomagnetischen Teilchen eingesetzt, die zudem ein Bindemittel enthalten kann. Beim 3D-Druck wird in der Regel nur Bindemittel auf vorgelegtes Pulver des thermomagnetischen Materials aufgebracht.

Als Bindemittel wird beim 3D-Druck bevorzugt ein polymeres Bindemittel eingesetzt, wobei die resultierende thermoplastische Formmasse zunächst im Druckverfahren unterworfen wird, anschließend das Bindemittel entfernt wird und der resultierende Grünkörper gesintert wird. Es ist auch möglich, das Pulver des thermomagnetischen Materials mit einem polymeren Bindemittel zu beschichten und sodann die Formmasse auszubilden.

Es können erfindungsgemäß dabei beliebige geeignete organische Bindemittel eingesetzt werden, die als Bindemittel für thermomagnetische Materialien einsetzbar sind. Dabei handelt es sich insbesondere um oligomere oder polymere Systeme.

Als organische Bindemittel kommen insbesondere natürliche und synthetische Polymere in Betracht, die chemisch oder physikalisch härtend sein können, z.B. luftaushärtend, strahlungshärtend oder temperaturhärtend.

Bevorzugte Polymere sind ABS (Acrylnitril-Butadien-Styrol); ASA (Acrylnitril-Styrol-Acrylat); acrylierte Acrylate; Alkydharze; Alkylvinylacetate; Alkylenvinylacetat-Copolymere, insbesondere Methylenvinylacetat, Ethylenvinylacetat, Butylenvinylacetat; Alkylenvinylchlorid-Copolymere, Aminoharze; Aldehyd- und Ketonharze; Cellulose und Cellulosederivate, insbesondere Alkylcellulose, Celluloseester, wie -Acetate, -Propionate, -Butyrate, Celluloseether, Carboxyalkylcellulosen, Cellulosenitrat; Epoxyacrylate; Epoxidharze; modifizierte Epoxidharze, zum Beispiel bifunktionelle oderpolyfunktionelle Bisphenol A oder Bisphenol F-Harze, Epoxy-Novolak-Harze, bromierte Epoxidharze, cycloaliphatische Epoxidharze; aliphatische Epoxidharze, Glycidether, Vinylether, Ethylenacrylsäurecopolymere; Kohlenwasserstoffharze; MABS (transparentes ABS mit Acrylat-Einheiten enthaltend); Melaminharze, Maleinsäureanhydridcopolymerisate; Methacrylate, gegebenenfalls aminfunktionalisiert; Naturkautschuk; synthetischer Kautschuk; Chlorkautschuk; Naturharze; Kollophoniumharze; Schellack; Phenolharze; Polyester; Polyesterharze wie Phenylesterharze; Polysulfone; Polyethersulfone; Polyamide; Polyimide; Polyaniline; Polypyrrole; Polybutylenterephthalat (PBT); Polycarbonat (zum Beispiel Makroion^{®} der Bayer MaterialScience AG); Polyesteracrylate; Polyetheracrylate; Polyethylen; Polyethylenthiophene; Polyethylennaphthalate; Polyethylenterephthalat (PET); Polyethylenterephthalat-Glykol (PETG); Polypropylen; Polymethylmethacrylat (PMMA); Polyphenylenoxid (PPO); Polystyrole (PS), Polytetrafluorethylen (PTFE); Polytetrahydrofuran; Polyether (zum Beispiel Polyethylenglykol, Polypropylenglykol), Polyvinylverbindungen, insbesondere Polyvinylchlorid (PVC), PVC-Copolymere, PVdC, Polyvinylacetat sowie deren Copolymere, gegebenenfalls teilhydrolysierter Polyvinylalkohol, Polyvinylacetale, Polyvinylacetate, Polyvinylpyrrolidon, Polyvinylether, Polyvinylacrylate und -methacrylate in Lösung und als Dispersion sowie deren Copolymere, Polyacrylaäureester und Polystyrolcopolymere; Polystyrol (schlagfest oder nicht schlagfest modifiziert); Polyurethane, unvernetzte bzw mit Osocyanaten versetzt; Polyurethanacrylate; Styrol-Acryl-Copolymere; Styrol-ButadienBlockcopolymere (zum Beispiel Styroflex^{®} oder Styrolux^{®} der BASF SE, K-Resin™ der CPC); Proteine wie zum Beispiel Casein; SIS, SPS-Blockcopolymere; Triazin-Harz, Bismaleimid-Triazin-Harz (BT), Cyanatester-Harz (CE), Allylierter Polyphenylenether (APPE). Weiterhin können Mischungen zweier oder mehrerer Polymere das Matrixmaterial bilden.

Ferner können auch hyperverzweigte Polyurethane als Bindemittel eingesetzt werden. Dabei können beliebige geeignete hyperverzweigte Polymere eingesetzt werden, vorzugsweise die in WO 02/36695 beschriebenen Verbindungen.

Das thermomagnetische Pulver kann in beliebiger geeigneter Weise in das Bindemittel eingebracht werden mit Hilfe üblicher Vorrichtungen wie Kneter, Dissolver, Rotor-Stator Mischern oder Rührwerksmühlen. Dabei muss die Formmasse in einem geeigneten Lösemittel oder einer Lösemittelmischung dispergiert werden, wobei das gewählte Lösemittel von der Löslichkeit des Bindemittels und dem jeweiligen Druckverfahren abhängt.

Geeignete Lösemittel sind zum Beispiel aliphatische und aromatische Kohlenwasserstoffe (zum Beispiel n-Octan, Cyclohexan, Toluol, Xylol), Alkohole (zum Beispiel Methanol, Ethanol, 1-Propanol, 2-Propanol, 1-Butanol, 2-Butanol, Amylalkohol), mehrwertige Alkohole wie Glycerin, Ethylenglykol, Propylenglykol, Neopentylglykol, Alkylester (zum Beispiel Methylacetat, Ethylacetat, Propylacetat, Butylacetat, Isobutylacetat, Isopropylacetat, 3-Methylbutanol), Alkoxyalkohole (zum Beispiel Methoxypropanol, Methoxybutanol, Ethoxypropanol), Alkylbenzole (zum Beispiel Ethylbenzol, Isopropylbenzol), Butylglykol, Butyldiglykol, Alkylglykolacetate (zum Beispiel Butylglykolacetat, Butyldiglykolacetat), Dimethylformamid (DMF), Diacetonalkohol, Diglykoldialkylether, Diglykolmonoalkylether, Dipropylenglykoldialkylether, Dipropylenglykolmonoalkylether, Diglykolalkyletheracetate, Dipropylenglykolalkyletheracetate, Dioxan, Dipropylenglykol und -ether, Diethylenglykol und -ether, DBE (dibasic Ester), Ether (zum Beispiel Diethylether, Tetrahydrofuran), Ethylenchlorid, Ethylenglykol, Ethylenglykolacetat, E-thylenglykoldimethylester, Kresol, Lactone (zum Beispiel Butyrolacton), Ketone (zum Beispiel Aceton, 2-Butanon, Cyclohexanon, Methylethylketon (MEK), Methylisobutylketon (MIBK)), Methyldiglykol, Methylenchlorid, Methylenglykol, Methylglykolacetat, Methylphenol (ortho-, meta-, para-Kresol), Pyrrolidone (zum Beispiel N-Methyl-2-pyrrolidon), Propylenglykol, Propylencarbonat, Tetrachlorkohlenstoff, Toluol, Trimethylolpropan (TMP), aromatische Kohlenwasserstoffe und Gemische, aliphatische Kohlenwasserstoffe und Gemische, alkoholische Monoterpene (wie zum Beispiel Terpineol), Wasser sowie Mischungen aus zwei oder mehreren dieser Lösemittel.

Bevorzugte Lösemittel sind Alkohole (zum Beispiel Ethanol, 1-Propanol, 2-Propanol, Butanol), Alkoxyalhohole (zum Beispiel Methoxypropanol, Ethoxypropanol, Butylglykol, Butyldiglykol), Butyrolacton, Diglykoldialkylether, Diglykolmonoalkylether, Dipropylenglykoldialkylether, Dipropylenglykolmonoalkylether, Propylengylkolmonoalkylether, Ester (zum Beispiel Ethylacetat, Butylacetat, Butylglykolacetat, Butyldiglykolacetat, Diglykolalkyletheracetate, Dipropylenglykolalkyletheracetate, Propylenglykolalkyletheracetat, DBE), Ether (zum Beispiel Tetrahydrofuran), mehrwertige Alkohole wie Glycerin, Ethylenglykol, Propylenglykol, Neopentylglykol, Ketone (zum Beispiel Aceton, Methylethylketon, Methylisobutylketon, Cyclohexanon), Kohlenwasserstoffe (zum Beispiel Cyclohexan, Ethylbenzol, Toluol, Xylol), DMF, N-Methyl-2-pyrrolidon, Wasser sowie Mischungen davon.

Die Dispersion kann weiterhin eine Dispergiermittelkomponente enthalten. Diese besteht aus einem oder mehreren Dispergiermitteln.

Grundsätzlich sind alle dem Fachmann für die Anwendung in Dispersionen bekannten und im Stand der Technik beschriebenen Dispergiermittel geeignet. Bevorzugte Dispergiermittel sind Tenside oder Tensidgemische, beispielsweise anionische, kationische, amphotere oder nichtionische Tenside.

Kationische und anionische Tenside sind beispielsweise in "Encyclopedia of Polymer Science and Technology", J. Wiley & Sons (1966), Band 5, Seiten 816 bis 818, und in "Emulsion Polymerisation and Emulsion Polymers", Herausgeber P. Lovell und M. EI-Asser, Verlag Wiley & Sons (1997), Seiten 224-226, beschrieben.

Es ist aber auch die Verwendung von dem Fachmann bekannten Polymeren mit pigmentaffinen Ankergruppen als Dispergiermittel möglich.

Weiterhin sind weitere Additive, wie Thixotropiermittel, zum Beispiel Kieselsäure, Silikate, wie zum Beispiel Aerosile oder Bentonite oder organische Thixotropiermittel und Verdicker, wie zum Beispiel Polyacrylsäure, Polyurethane, hydriertes Rizinusöl, Farbstoffe, Fettsäuren, Fettsäureamide, Weichmacher, Netzmittel, Entschäumer, Gleitmittel, Trockenstoffe, Vernetzer, Komplexbildner, Wachse, Pigmente einsetzbar.

Erfindungsgemäß werden Rapid-Prototyping/3D-Druckverfahren eingesetzt wie in den Ansprüchen definiert.

Dem Fachmann ist unter dem Begriff "Rapid Prototyping" (RP) ein Fertigungsverfahren für Musterbauteile bekannt, mit dem auch sehr detailreiche Werkstücke nahezu beliebiger Geometrie aus vorhandenen CAD-Daten möglichst ohne manuelle Umwege oder Formen direkt und schnell hergestellt werden können. Das Prinzip des Rapid Prototyping beruht auf dem schichtweisen Aufbau von Bauteilen unter Nutzung physikalischer und/oder chemischer Effekte. Dabei haben sich zahlreiche Verfahren wie z.B. das Selective Laser Sintering (SLS) oder die Stereolithographie (SLA) etabliert. Die Verfahren an sich unterscheiden sich in Bezug auf das Material, mit welchem die Schichten aufgebaut werden (Polymere, Harze, Papierbahnen, Pulver etc.) und die Methode, mit welcher diese Materialien verbunden werden (Laser, Heizung, Binder oder Bindersysteme etc.). Die Verfahren sind in zahlreichen Veröffentlichungen beschrieben.

Eines der Rapid Prototyping Verfahren ist in EP-A0431 924 beschrieben und umfasst den schichtweisen Aufbau von dreidimensionalen Bauteilen aus Pulver und Bindemittel. Nicht gebundenes Pulver wird am Ende entfernt und es bleibt das Werkstück in der gewünschten Geometrie zurück.

Aus WO 2004/112988 ist bekannt, dass auch mehr als ein pulverförmiges Ausgangsmaterial verwendet werden kann, und US 2005/0017394 offenbart die Verwendung von Aktivierungsmitteln, welche die Aushärtung des Binders induzieren.

R. Knitter et al. beschreiben u. a. in Galvanotechnik 1/2004, S. 196 bis 204 keramische Reaktoren für den Einsatz in der Mikroreaktortechnik. Die Formgebung erfolgt dabei über eine Rapid-Prototyping-Prozesskette, wobei allerdings als zusätzliche Zwischenschritte 1.) das durch Stereolithographie erhaltene Urmodell aus Kunststoff in eine Silikonform umkopiert wird, welche dann 2.) als Abformwerkzeug im Niederdruck-Spritzguss mit einem keramischen Schlicker fungiert. Die erhaltenen keramischen Mikroreaktoren dienen u. a. als Katalysatorträger, auf welche die eigentlichen Katalysatoren beispielsweise als Suspension aufgebracht werden. Der Nachteil dieses Herstellverfahrens ist der zusätzliche Verfahrensschritt, bei dem zunächst die Negativform hergestellt wird, bevor die endgültige Produktion in Form von Abgießen erfolgt.

In cfi/Ber. DKG 82 (2005) Nr. 13, S. 99 bis 103 offenbaren U. Kaufmann et al. die Herstellung von 3D-Keramikbauteilen mittels eines Verfahrens, welches auf dem schichtweisen Aufbau der Bauteile in einem Pulverbett basiert. Mögliche Anwendungen dieser Bauteile als Implantate werden diskutiert.

Beispielsweise sind die Formkörper erhältlich durch ein Verfahren, umfassend die Schritte:
a) Herstellung eines Formkörpers mittels eines pulverbasierten Rapid-Prototyping-Verfahrens, aus den folgenden Schritten, die so oft zu wiederholen sind, bis der gewünschte Formkörper vollständig aus den einzelnen Schichten aufgebaut ist: Auftragen eines pulverförmigen Ausgangsmaterials oder Ausgangsmaterialgemisches mit einer mittleren Teilchengröße im Bereich von etwa 0,5 µm bis 450 µm in einer dünnen Schicht auf eine Unterlage und anschließendes Versetzen an ausgewählten Stellen dieser Schicht mit einem Bindemittel und eventuell erforderlichen Hilfsmitteln, oder Bestrahlen oder Behandeln auf andere Art, so dass das Pulver an diesen Stellen verbunden wird, wodurch das Pulver sowohl innerhalb der Schicht als auch mit den angrenzenden Schichten verbunden wird, Wiederholen dieses Vorgangs so oft, dass die gewünschte Form des Werkstücks vollständig in dem gebildeten Pulverbrett abgebildet ist, Entfernen des nicht durch das Bindemittel verbundenen Pulvers, so dass das verbundene Pulver in der Form des gewünschten Formkörpers zurückbleibt,
b) gegebenenfalls Durchführen einer Temperaturbehandlung, vorzugsweise Sintern und/oder Calcinieren des Formkörpers, wobei zunächst eine Entbinderung durchgeführt werden kann,
c) gegebenenfalls Aufbringung mindestens einer katalytisch aktiven Komponente auf den Formkörper,
d) gegebenenfalls Durchführen einer weiteren Temperaturbehandlung,
wobei die Schritte b), c) und/oder d) mehrfach durchgeführt werden können.

Entsprechend den erforderlichen Bedingungen können die Formkörper für die Anwendung maßgeschneidert hergestellt werden, wie es mit herkömmlichen Techniken wie Extrudieren oder Spritzguss nicht möglich ist. Der Vorteil der Rapid-Prototyping-Technologie gegenüber dieser konventionellen Fertigungstechniken besteht darin, dass theoretisch jede beliebige Geometrie, auch komplexe Bauteile mit Mikrokanälen mittels eines CAD-Datensatzes computergesteuert in das entsprechende dreidimensionale Bauteil ohne vorherige Abformung in Gussformen, ohne Ausschneiden, Ausfräsen, Schleifen, Löten etc. umgesetzt werden kann. Auf diese Weise ist die Herstellung von Formkörpern möglich, die aufgrund ihrer optimierten Geometrie Vorteile für den Stoff- und Wärmetransport bieten.

In dem Rapid-Prototyping-Verfahren werden pulverförmige Ausgangsmaterialien eingesetzt. Es können sowohl monodisperse wie auch polydisperse Pulver eingesetzt werden. Dabei können mit feineren Teilchen naturgemäß dünnere Schichten realisiert werden, wodurch für den Aufbau eines gewünschten Formkörpers eine größere Anzahl von Schichten und damit eine höhere räumliche Auflösung möglich ist als mit gröberen Teilchen. Bevorzugt werden Pulver mit einer mittleren Teilchengröße im Bereich von etwa 0,5 µm bis etwa 450 µm, besonders bevorzugt von etwa 1 µm bis etwa 300 µm und ganz besonders bevorzugt von 10 bis 100 µm. Das einzusetzende Pulver kann, wenn dies erforderlich ist, auch gezielt vorbehandelt werden, z.B. durch mindestens einen der Schritte Calcinieren, Kompaktieren, Mischen, Granulieren, Sieben, Agglomerieren oder Mahlen auf eine bestimmte Teilchengrößenfraktion.

Das Rapid-Prototyping-Verfahren besteht bekanntermaßen aus den folgenden Schritten, die so oft zu wiederholen sind, bis der gewünschte Formkörper vollständig aus den einzelnen Schichten aufgebaut ist. Ein pulverförmiges Ausgangsmaterial oder Ausgangsmaterialgemisch wird in einer dünnen Schicht auf eine Unterlage aufgetragen und anschließend an ausgewählten Stellen dieser Schicht mit einem Bindemittel und eventuell erforderlichen Hilfsmitteln versetzt, oder bestrahlt oder auf andere Art behandelt, so dass das Pulver an diesen Stellen verbunden wird, wodurch das Pulver sowohl innerhalb der Schicht als auch mit den angrenzenden Schichten verbunden wird. Nachdem dieser Vorgang so oft wiederholt wurde, dass die gewünschte Form des Werkstücks vollständig in dem gebildeten Pulverbett abgebildet ist, wird das nicht durch das Bindemittel verbundene Pulver entfernt, und es bleibt das verbundene Pulver in der gewünschten Form zurück.

Vorteilhafte Bindemittel sind organische Materialien, besonders solche, die sich vernetzen lassen oder auf andere Art und Weise eine kovalente Bindung miteinander eingehen können, beispielsweise Phenolharze, Polyisocyanate, Polyurethane, Epoxyharze, Furanharze, Harnstoff-Aldehyd-Kondensate, Furfurylalkohol, Acrylsäure- und Acrylatdispersionen, polymere Alkohole, Peroxide, Kohlenhydrate, Zucker, Zuckeralkohole, Proteine, Stärke, Carboxymethylcellulose, Xanthan, Gelatine, Polyethylenglykol, Polyvinylalkohole, Polyvinylpyrrolidon oder Mischungen davon.

Die Bindemittel werden flüssig entweder in gelöster oder dispergierter Form eingesetzt, wobei sowohl organische Lösungsmittel (z. B. Toluol) als auch Wasser verwendet werden können.

Die Anwendung der Bindemittel erfolgt beispielsweise über eine Düse, einen Druckkopf oder eine andere Apparatur, die eine genaue Platzierung möglichst kleiner Tropfen des Bindemittels auf der Pulverschicht erlaubt. Das Verhältnis von Pulvermenge zu Bindemittelmenge variiert in Abhängigkeit von den verwendeten Substanzen und liegt in der Regel im Bereich von etwa 40 : 60 bis etwa 99 : 1 Gewichtsteilen, bevorzugt im Bereich von etwa 70 : 30 bis etwa 99 : 1 Gewichtsteilen, besonders bevorzugt im Bereich von etwa 85:15 bis etwa 98 : 2 Gewichtsteilen.

Des Weiteren können gegebenenfalls ein oder mehrere Hilfsmittel zum Einsatz kommen, die beispielsweise einen Einfluss auf die Vernetzung der Bindemittel haben können oder als Härter dienen. Als Hilfsmittel werden insbesondere Wasser, anorganische Säuren oder Basen, aber auch schnell hydrolysierbare oder kondensierbare Verbindungen eingesetzt. Die Hilfsmittel können separat appliziert werden, sie können aber gegebenenfalls auch dem Pulverbett und/oder dem Bindemittel bzw. der Bindemittel-Lösung zugesetzt werden.

Es kann auf die folgende Literatur verwiesen werden: Gebhardt, Rapid Prototyping, Werkzeuge für die schnelle Produktentstehung, Carl Hansa Verlag München, 2000, J. G. Heinrich, New Developments in the Solid Freeform Fabrication of Ceramic Components, cfi/Ber. DKG 66 (1999), Seiten 29 bis 35, R. Knitter, W. Bauer, Keramische Reaktoren für den Einsatz in der Mikroreaktor-Technik, Nachrichten-Forschungszentrum Karlsruhe 34 (2002), Seiten 143 bis 152, A. Nagy, R. Lenk, Rapid Prototyping-Fertigungsverfahren für die schnelle Bereitstellung keramischer Funktionsmuster, in: Kriegesmann (Herausgeber), Technische keramische Werkstoffe, 2004, ke 12/2005, Seiten 54 bis 55, Maßstäbe gesetzt im Rapid Prototyping, siehe auch "Rapid Prototyping" in www.werkstoffzentrum.de.

Nach der Fertigstellung des Formkörpers wird dieser gegebenenfalls einer thermischen Behandlung unterzogen, was auch in mehreren Stufen oder durch ein Temperaturprogramm bzw. -profil erfolgen kann. Generell erfolgt die thermische Behandlung im Bereich von etwa 300 bis 2100 °C. Beispielsweise kann das Pulverbett mit dem darin befindlichen Formkörper zunächst auf eine Temperatur im Bereich von 300 bis 700 °C, bevorzugt von 300 bis 550 °C erhitzt werden. Hierbei soll die Vernetzung des Bindemittels vervollständigt werden, z. B. durch Hydrolyse und/oder Kondensation unter Abspaltung von Wasser oder Alkoholen, und organische Bestandteile können zumindest teilweise oxidativ entfernt werden. Daran kann sich noch eine zweite Temperaturstufe anschließen, die in der Regel ein Erhitzen auf eine Temperatur von 900 bis 2100 °C, bevorzugt von 1100 bis 1800 °C umfasst. Hierbei ist man im Bereich des Sinterns, bei dem die Pulverpartikel miteinander Bindungen eingehen und so die mechanische Festigkeit des Formkörpers erhöht wird. Beim Sinterprozess kann es zu einer gewissen Schwindung kommen, was durch die CAD-Vorlage beim Drucken zu berücksichtigen ist. Das nicht durch das Bindemittel verbundene Pulver muss spätestens vor dem Sinterungsschritt entfernt werden, dies kann beispielsweise durch Druckluft oder Abblasen erfolgen. Dann bleibt das verbundene Pulver in der gewünschten Form zurück. Die zweite Temperaturstufe kann so gewählt werden, dass das resultierende Material eine hohe oder eine niedrige Porosität aufweist. Je nach den Erfordernissen der zu katalysierenden Reaktion können mechanische Stabilität, Struktur und Porosität des Materials durch diesen Schritt optimiert werden.

Die jeweiligen Druckverfahren werden so gesteuert, dass Formkörper resultieren, die eine geeignete Kombination aus hoher Wärmeübertragung, geringem Durchflusswiderstand und hoher magnetokalorischer Dichte aufweisen. Bevorzugt ist dabei ein optimales Verhältnis von hoher magnetokalorischer Dichte und ausreichender Porosität, so dass eine effiziente Wärmeabführung bzw. ein effizienter Wärmetausch gewährleistet sind. Anders ausgedrückt zeigen die erfindungsgemäß hergestellten Formkörper ein hohes Verhältnis von Oberfläche zu Volumen. Durch die große Oberfläche ist es möglich, große Wärmemengen aus dem Material herauszutransportieren und in ein Wärmeüberträgermedium einzubringen. Die Struktur sollte mechanisch stabil sein, um den mechanischen Belastungen durch ein fluides Kühlmedium gewachsen zu sein. Zudem sollte der Fließwiderstand so gering sein, dass nur ein geringer Druckabfall durch das poröse Material resultiert. Das magnetische Feldvolumen sollte vorzugsweise minimiert werden.

Die erfindungsgemäß erhaltenen Formkörper werden bevorzugt in Kühlschränken, Klimaanlagen, Wärmepumpen bzw. Wärmetauschern oder in der Stromerzeugung durch direkte Umwandlung von Wärme verwendet. Dabei sollten die Materialien einen großen magnetokalorischen Effekt in einem Temperaturintervall zwischen -100 °C und +150 °C zeigen.

Die Wärmeübergangsrate limitiert die Zyklusgeschwindigkeit und hat damit einem großen Einfluss auf die Leistungsdichte.

Bei der Stromgewinnung ist um das thermomagnetische Material eine Spule aus einem elektrisch leitfähigen Material angeordnet. In dieser Spule wird durch Veränderung des Magnetfeldes bzw. der Magnetisierung ein Strom induziert, der zur Verrichtung von elektrischer Arbeit verwendet werden kann. Vorzugsweise werden dabei die Spulengeometrie und die Geometrie des thermomagnetischen Materials so gewählt, dass eine möglichst hohe Energieausbeute mit einem möglichst geringen Druckverlust resultiert. Die Spulenwindungsdichte (Windungen/Länge), die Spulenlänge, der Ladungswiderstand und die Temperaturveränderung des thermomagnetischen Materials sind wichtige Einflussgrößen für die Energieausbeute.

Das thermomagnetische Material befindet sich in einem äußeren Magnetfeld. Dieses Magnetfeld kann durch Permanentmagnete oder Elektromagnete erzeugt werden. Elektromagnete können herkömmliche Elektromagnete oder supraleitende Magnete sein.

Vorzugsweise ist der thermomagnetische Generator so ausgelegt, dass die Wärmeenergie aus der Geothermie oder aus der Abwärme industrieller Prozesse oder aus Solarenergie oder Sonnenkollektoren, z. B. in der Photovoltaik umgewandelt werden kann. Gerade in Regionen mit geothermischer Aktivität erlaubt ein derartiger thermomagnetischer Generator eine einfache Stromerzeugung unter Ausnutzung der Erdwärme. In industriellen Prozessen fällt häufig Prozesswärme oder Abwärme an, die üblicherweise in die Umgebung abgeleitet und nicht weiter genutzt wird. Auch Abwässer weisen häufig eine höhere Temperatur beim Austritt als beim Eintritt auf. Gleiches gilt für Kühlwasser. Damit erlaubt der thermomagnetische Generator die Gewinnung von elektrischer Energie aus Abwärme, die ansonsten verloren geht. Dadurch, dass der thermomagnetische Generator im Bereich der Raumtemperatur betrieben werden kann, ist es möglich, diese Abwärmen zu nutzen und in elektrische Energie umzuwandeln. Die Energieumwandlung erfolgt dabei vorzugsweise bei Temperaturen im Bereich von 20 bis 150 °C, besonders bevorzugt bei Temperaturen im Bereich von 40 bis 120 °C.

In (konzentrierten) Photovoltaikanlagen werden häufig hohe Temperaturen erreicht, so dass gekühlt werden muss. Diese abzuführende Wärme kann in Strom umgewandelt werden.

Zur Stromerzeugung wird das thermomagnetische Material abwechselnd mit einem warmen Reservoir und einem kalten Reservoir kontaktiert und damit einem Aufwärmund Abkühlungszyklus unterworfen. Die Zykluszeit wird dabei nach den jeweiligen technischen Voraussetzungen gewählt.

Die nachfolgenden Beispiele 1 und 2 beschreiben die Herstellung für die erfindungsgemäße Anwendung geeigneter thermomagnetischer Materialien, die Beispiele 3 und 4 die Herstellung der gewünschten Strukturen durch Rapid Prototyping.

### Beispiele

### Beispiel 1

Evakuierte Quarzampullen, die gepresste Proben von MnFePGe enthielten, wurden für 10 Stunden bei 1100 °C gehalten, um das Pulver zu sintern. Auf dieses Sintern folgte ein Tempern bei 650 °C für 60 Stunden, um eine Homogenisierung herbeizuführen. Anstelle eines langsamen Abkühlens im Ofen auf Raumtemperatur wurden die Proben jedoch sofort in Wasser bei Raumtemperatur gequencht. Das Quenchen in Wasser verursachte einen gewissen Grad von Oxidation an den Probenoberflächen. Die äußere oxidierte Schale wurde durch Ätzen mit verdünnter Säure entfernt. Die XRD-Muster zeigen, dass alle Proben in einer Struktur des Fe₂P-Typs kristallisieren.

Folgende Zusammensetzungen wurden dabei erhalten:

Mn_{1,1}Fe_{0,9}P_{0,81}Ge_{0,19}; Mn_{1,1}Fe_{0,9}P_{0,78}Ge_{0,22}, Mn_{1,1}Fe_{0,9}P_{0,75}Ge_{0,25} und Mn_{1,2}Fe_{0,8}P_{0,81}Ge_{0,19}. Die beobachteten Werte für die thermische Hysterese sind für diese Proben in der angegebenen Reihenfolge 7 K, 5 K, 2 K und 3 K. Gegenüber einer langsam abgekühlten Probe, die eine thermische Hysterese von mehr als 10 K aufweist, konnte die thermische Hysterese stark vermindert werden.

Die thermische Hysterese wurde dabei in einem Magnetfeld von 0,5 Tesla bestimmt.

Die Curie-Temperatur kann durch Variation des Mn/Fe-Verhältnisses und der Ge-Konzentration eingestellt werden, ebenso der Wert für die thermische Hysterese.

Die Änderung der magnetischen Entropie, berechnet aus der Gleichstrommagnetisierung unter Verwendung der Maxwell-Beziehung beträgt für eine maximale Feldänderung von 0 bis 2 Tesla für die ersten drei Proben 14 J/kgK, 20 J/kgK bzw. 12,7 J/kgK.

Die Curie-Temperatur und die thermische Hysterese nehmen mit zunehmendem Mn/Fe-Verhältnis ab. Im Ergebnis zeigen die MnFePGe-Verbindungen relativ große MCE-Werte in niedrigem Feld. Die thermische Hysterese dieser Materialien ist sehr klein.

### Beispiel 2

### Schmelzspinnen von MnFeP(GeSb)

Die polykristallinen MnFeP(Ge,Sb)-Legierungen wurden zunächst in einer Kugelmühle mit hohem Energie-Eintrag und durch Festphasenreaktionsverfahren hergestellt, wie sie in WO 2004/068512 und J. Appl. Phys. 99,08 Q107 (2006) beschrieben sind. Die Materialstücke wurden sodann in ein Quarzrohr mit einer Düse gegeben. Die Kammer wurde auf ein Vakuum von 10⁻² mbar evakuiert und anschließend mit Argongas hoher Reinheit gefüllt. Die Proben wurden durch Hochfrequenz geschmolzen und durch die Düse versprüht aufgrund einer Druckdifferenz zu einer Kammer mit einer rotierenden Kupfertrommel. Die Oberflächengeschwindigkeit des Kupferrades konnte eingestellt werden, und Abkühlgeschwindigkeiten von etwa 10⁵ K/s wurden erreicht. Anschließend wurden die gesponnenen Bänder bei 900 °C für eine Stunde getempert.

Aus der Röntgendiffraktometrie geht hervor, dass alle Proben im hexagonalen Fe₂P-Strukturmuster kristallisieren. Im Unterschied zu nicht nach dem Schmelzspinnverfahren hergestellten Proben, wurde keine kleinere Verunreinigungsphase von MnO beobachtet.

Die erhaltenen Werte für die Curie-Temperatur, die Hysterese und die Entropie wurden für unterschiedliche Umfangsgeschwindigkeiten beim Schmelzspinnen bestimmt. Die Ergebnisse sind in den nachstehenden Tabellen 1 und 2 aufgeführt. Jeweils wurden geringe Hysterese-Temperaturen bestimmt.

### Beispiel 3:

Basis ist ein thermomagnetisches Materialpulver, das mit Hilfe eines Turbula-Mischers (Willy A. Bachofen AG, 4058 Basel, Schweiz) mit einem Feststoff-Binder Xanthan, 200 mesh (von König & Wiegand, 40472 Düsseldorf) gemischt wird. Der Anteil des Feststoff-Binders beträgt 10 Gew.-%, bezogen auf das thermomagnetische Pulver. Das dreidimensionale Drucken wird mit einem Z-Printer 310 (Z-Corporation, Burlington, MA 01803, USA) ausgeführt unter Verwendung einer wasserbasierten Binderlösung ZB 54 (Z-Corporation, Burlington, MA 01803, USA). Es werden 2 % des flüssigen Binders eingesetzt. Nach dem Drucken werden die Teile zunächst bei 60 °C über 8 h getrocknet und dann mit Pressluft freigeblasen. Das Sintern erfolgt bei 1600°C mit 2 h Haltezeit.

### Beispiel 4:

Die Formgebung mittels Rapid Prototyping erfolgt auf der ProMetal RCT S15 (der ProMetal RCT GmbH, 86167 Augsburg) durch abwechselndes Auftragen von Pulver-und Bindemittelschichten. Als Pulver wird ein thermomagnetisches Material und als Bindemittel ein Furanharz-Säure-Gemisch verwendet. Dieses Bindemittelgemisch von Askuran 120 (von Ashland-Südchemie, 40721 Hilden) und RPT 100 (von Ashland-Südchemie, 40721 Hilden) wird im Mischungsverhältnis 100:40 eingesetzt, wobei das Harz dem Pulver zugesetzt und der Härter über die Druckkopfdüsen dosiert wird. Der Pulvermenge wird eine Harzmenge von etwa 1,5 % zugesetzt. Die Formen werden durch den Aufbau von zahlreichen Schichten hergestellt und bei Raumtemperatur über Nacht getrocknet.

**Tabelle 1:**

| **Bänder** | **V (m/s)** | **T_{c} (K)** | **ΔT_{hys} (K)** | **-ΔS(J/kgK)** |
|---|---|---|---|---|
| Mn_{1,2}Fe_{0,8}P_{0,73}Ge_{0,25}Sb_{0,02} | 30 | 269 | 4 | 12,1 |
| Mn_{1,2}Fe_{0,8}P_{0,70}Ge_{0,20}Sb_{0,10} | 30 | 304 | 4,5 | 19,0 |
| | 45 | 314 | 3 | 11,0 |
| MnFeP_{0,70}Ge_{0,20}Sb_{0,10} | 20 | 306 | 8 | 17,2 |
| | 30 | 340 | 3 | 9,5 |
| MnFeP_{0,75}Ge_{0,25} | 20 | 316 | 9 | 13,5 |
| | 40 | 302 | 8 | - |
| Mn_{1,1}Fe_{0,9}P_{0,78}Ge_{0,22} | 20 | 302 | 5 | - |
| | 40 | 299 | 7 | - |
| Mn_{1,1}Fe_{0,9}P_{0,75}Ge_{0,25} | 30 | 283 | 9 | 11,2 |
| Mn_{1,2}Fe_{0,8}P_{0,75}Ge_{0,25} | 30 | 240 | 8 | 14,2 |
| Mn_{1,1}Fe_{0,9}P_{0,73}Ge_{0,27} | 30 | 262 | 5 | 10,1 |

| **Bulk** | | **T_{c} (K)** | **ΔT_{hys} (K)** | **-ΔS(J/kgK)** |
|---|---|---|---|---|
| MnFeP_{0,75}Ge_{0,25} | | 327 | 3 | 11,0 |
| Mn_{1,1}Fe_{0,9}P_{0,81}Ge_{0,19} | | 260 | 7 | 14,0 |
| Mn_{1,1}Fe_{0,9}P_{0,78}Ge_{0,22} | | 296 | 5 | 20,0 |
| Mn_{1,1}Fe_{0,9}P_{0,75}Ge_{0,25} | | 330 | 2 | 13,0 |

| **Bänder** | **V (m/s)** | **T_{c} (K)** | **ΔT_{hys} (K)** | **-ΔS(J/kgK)** |
|---|---|---|---|---|
| Mn_{1,2}Fe_{0,8}P_{0,75}Ge_{0,25} | | 305 | 3 | - |
| Mn_{1,2}Fe_{0,8}P_{0,73}Ge_{0,27} | | 313 | 5 | - |
| Mn_{1,3}Fe_{0,7}P_{0,78}Ge_{0,22} | | 203 | 3 | 5,1 |
| Mn_{1,3}Fe_{0,75}P_{0,75}Ge_{0,25} | | 264 | 1 | - |

**Tabelle 2**

| **Bulk** | **T_{c} (K)** | **ΔT_{hys} (K)** | **-ΔS(J/kgK)** |
|---|---|---|---|
| MnFeP_{0,75}Ge_{0,25} | 327 | 3 | 11,0 |
| Mn_{1,16}Fe_{0,84}P_{0,75}Ge_{0,25} | 330 | 5 | 22,5 |
| Mn_{1,8}Fe_{0,82}P_{0,75}Ge_{0,25} | 310 | 3 | 16,1 |
| Mn_{1,20}Fe_{0,80}P_{0,75}Ge_{0,25} | 302 | 1 | 12,0 |
| Mn_{1,22}Fe_{0,78}P_{0,75}Ge_{0,25} | 276 | 4 | 11,7 |
| Mn_{1,26}Fe_{0,74}P_{0,75}Ge_{0,25} | 270 | 1 | 8,5 |
| Mn_{1,1}Fe_{0,9}P_{0,81}Ge_{0,19} | 260 | 6 | 13,8 |
| Mn_{1,1}Fe_{0,9}P_{0,78}Ge_{0,22} | 296 | 4 | 20,0 |
| Mn_{1,1}Fe_{0,9}P_{0,77}Ge_{0,23} | 312 | 2 | 14,6 |
| Mn_{1,1}Fe_{0,9}P_{0,75}Ge_{0,25} | 329 | 2 | 13,0 |

| **Bänder** | | | |
|---|---|---|---|
| Mn_{1,20}Fe_{0,80}P_{0,75}Ge_{0,25} | 288 | 1 | 20,3 |
| Mn_{1,22}Fe_{0,78}P_{0,75}Ge_{0,25} | 274 | 2 | 15,3 |
| Mn_{1,24}Fe_{0,76}P_{0,75}Ge_{0,25} | 254 | 2 | 16,4 |
| Mn_{1,26}Fe_{0,74}P_{0,75}Ge_{0,25} | 250 | 4 | 14,4 |
| Mn_{1,30}Fe_{0,70}P_{0,75}Ge_{0,25} | 230 | 0 | 9,8 |

## Patentansprüche

1. Verfahren zur Herstellung von Formkörpern für Wärmetauscher, enthaltend ein thermomagnetisches Material, das ausgewählt ist aus
(1) Verbindungen der allgemeinen Formel (I)
(A_{y}B_{1-y})_{2+δ}C_{w}DₓE_{z} (I)
mit der Bedeutung
A Mn oder Co,
B Fe, Cr oder Ni,
C, D, E mindestens zwei von C, D, E sind voneinander verschieden, haben eine nicht-verschwindende Konzentration und sind ausgewählt aus P, B, Se, Ge, Ga, Si, Sn, N, As und Sb,
δ Zahl im Bereich von - 0,2 bis 0,2
w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)
La(FeₓAl₁₋ₓ)₁₃H_{y} oder La(FeₓSi₁₋ₓ)₁₃H_{y} (II)
mit
x Zahl von 0,7 bis 0,95
y Zahl von 0 bis 3;
La(FeₓAl_{y}Co_{z})₁₃ oder La(FeₓSi_{y}Co_{z})₁₃ (III)
mit
x Zahl von 0,7 bis 0,95
y Zahl von 0,05 bis 1 - x
z Zahl von 0,005 bis 0,5;
LaMnₓFe₂₋ₓGe (IV)
mit
x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5,
(4) auf Gd und Si basierenden Verbindungen der allgemeinen Formel (V)
Gd₅(SiₓGe₁₋ₓ)₄ (V)
mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)
Tb₅(Si₄₋ₓGeₓ) (VI)
mit x = 0, 1, 2, 3, 4
XTiGe (VII)
mit X = Dy, Ho, Tm,
(8) auf Mn und Sb oder As basierenden Verbindungen der allgemeinen Formeln (VIII) und (IX)
Mn₂₋ₓZₓSb (VIII)
Mn₂ZₓSb₁₋ₓ (IX)
mit
Z Cr, Cu, Zn, Co, V, As, Ge,
x 0,01 bis 0,5,
wobei Sb durch As ersetzt sein kann, sofern Z nicht As ist,
wobei die Formkörper Kanäle zum Durchleiten eines fluiden Wärmetauschermediums aufweisen, **dadurch gekennzeichnet, dass** man ein Pulver des thermomagnetischen Materials in ein Bindemittel einbringt, die resultierende Formmasse durch Rapid-Prototyping/3D-Druck auf einen Träger aufbringt und das Bindemittel und gegebenenfalls den Träger nachfolgend entfernt und den resultierenden Grünkörper sintert und mehrere unterschiedliche thermomagnetische Materialien nebeneinander und/oder übereinander gedruckt werden, so dass unterschiedliche thermomagnetische Materialien, die einen magnetokalorischen Effekt bei unterschiedlichen Temperaturen zeigen, im selben Formkörper vorliegen, wobei die räumliche Anordnung der unterschiedlichen thermomagnetischen Materialien entlang zumindest einer Raumachse so erfolgt, dass sich entlang dieser mindestens einen Raumachse ein quasi-kontinuierlicher Anstieg oder Abfall der Temperatur ergibt, bei der jeweils der magnetokalorische Effekt auftritt.

2. Verfahren nach Anspruch 1, **dadurch gekennzeichnet, dass** das Pulver des thermomagnetischen Materials eine mittlere Teilchengröße im Bereich von 0,1 bis 100 µm aufweist.

3. Verfahren nach einem der Ansprüche 1 oder 2, **dadurch gekennzeichnet, dass** die Kanäle im Formkörper einen mittleren Durchmesser im Bereich von 0,1 bis 2000 µm aufweisen.

4. Verfahren nach einem der Ansprüche 1 bis 3, **dadurch gekennzeichnet, dass** die Kanäle so ausgebildet sind, dass eine oder mehrere Einlass- und Auslassöffnungen für das fluide Wärmetauschermedium vorgesehen sind und die Kanäle so angeordnet sind, dass sie eine weitgehend gleichmäßige Temperierung des Formkörpers erlauben.

5. Verfahren nach einem der Ansprüche 1 bis 4, **dadurch gekennzeichnet, dass** die Formmasse zusätzliche Additive zur Verbesserung der mechanischen Eigenschaften, der Korrosionsbeständigkeit und/oder der Leitfähigkeit enthält.

## Claims

1. A process for producing shaped bodies for heat exchangers, comprising a thermomagnetic material selected from
(1) compounds of the general formula (I)
(A_{y}B_{1-y}) _{2+δ}C_{w}DₓE_{z} (I)
where
A is Mn or Co,
B is Fe, Cr or Ni,
C, D and E at least two of C, D and E are different, have a non-vanishing concentration and are selected from P, B, Se, Ge, Ga, Si, Sn, N, As and Sb,
δ is a number in the range from -0.2 to 0.2, w, x, y, z are numbers in the range from 0 to 1, where w + x + z = 1;
(2) La- and Fe-based compounds of the general formulae (II) and/or (III) and/or (IV)
La (FeₓAl₁₋ₓ)₁₃H_{y} or La (FeₓSi₁₋ₓ)₁₃H_{y} (II)
where
x is a number from 0.7 to 0.95,
y is a number from 0 to 3;
La(FeₓAl_{y}Co_{z})₁₃ or La(FeₓSi_{y}Co_{z})₁₃ (III)
where
x is a number from 0.7 to 0.95,
y is a number from 0.05 to 1 - x,
z is a number from 0.005 to 0.5;
LaMnₓFe₂₋ₓGe (IV)
where
x is a number from 1.7 to 1.95 and
(3) Heusler alloys of the MnTP type where T is a transition metal and P is a p-doping metal having an electron count per atom e/a in the range from 7 to 8.5,
(4) Gd- and Si-based compounds of the general formula (V)
Gd₅ (SiₓGe₁₋ₓ)₄ (V)
where x is a number from 0.2 to 1,
(5) Fe₂P-based compounds,
(6) manganites of the perovskite type,
(7) compounds which comprise rare earth elements and are of the general formulae (VI) and (VII) Tb₅ (Si₄₋ₓGeₓ) (VI) where x = 0, 1, 2, 3, 4,
XTiGe (VII)
where X = Dy, Ho, Tm,
(8) Mn- and Sb- or As-based compounds of the general formulae (VIII) and (IX)
Mn₂₋ₓ2ₓSb (VIII)
Mn₂ZₓSb₁₋ₓ (IX)
where
Z is Cr, Cu, Zn, Co, V, As, Ge,
x is from 0.01 to 0.5,
where Sb may be replaced by As when Z is not As,
said shaped bodies having channels for passage of a fluid heat exchange medium, which comprises introducing a powder of the thermomagnetic material into a binder, applying the resulting molding material to a carrier by rapid prototyping/3D printing and subsequently removing the binder and optionally the carrier, and sintering the resulting green body, and printing a plurality of different thermomagnetic materials alongside one another and/or one on top of another, such that different thermomagnetic materials which exhibit a magnetocaloric effect at different temperatures are present in the same shaped body the three-dimensional arrangement of different thermomagnetic materials along at least one spatial axis being such that the result is a quasicontinuous rise or decline in the temperature at which the magnetocaloric effect occurs in each case along this at least one spatial axis.

2. The process according to claim 1, wherein the powder of the thermomagnetic material has a mean particle size in the range from 0.1 to 100 µm.

3. The process according to either of claims 1 and 2, wherein the channels in the shaped body have a mean diameter in the range from 0.1 to 2000 µm.

4. The process according to any one of claims 1 to 3, wherein the channels are configured so as to provide one or more inlet and outlet orifices for the fluid heat exchange medium, and the channels are arranged such that they allow substantially homogeneous temperature control of the shaped body.

5. The process according to any one of claims 1 to 4, wherein the molding material comprises additional additives for improving the mechanical properties, the corrosion resistance and/or the conductivity.

## Revendications

1. Procédé de fabrication de corps moulés pour échangeurs de chaleur, contenant un matériau thermomagnétique, qui est choisi parmi :
(1) les composés de formule générale (I)
(A_{y}B_{1-y})_{2+δ}C_{w}DₓE_{z} (I)
avec les significations
A Mn ou Co,
B Fe, Cr ou Ni,
C, D, E au moins deux éléments parmi C, D, E sont différents les uns des autres, ont une concentration non insignifiante et sont choisis parmi P, B, Se, Ge, Ga, Si, Sn, N, As et Sb,
δ un nombre dans la plage allant de -0,2 à 0,2,
w, x, y, z nombres dans la plage allant de 0 à 1, avec w + x + z = 1 ;
(2) les composés à base de La et Fe de formule générale (II) et/ou (III) et/ou (IV)
La(FeₓAl₁₋ₓ)₁₃H_{y} oder La(FeₓSi₁₋ₓ)₁₃H_{y} (II)
avec
x un nombre de 0,7 à 0,95,
y un nombre de 0 à 3 ;
La(FeₓAl_{y}Co_{z})₁₃ oder La(FeₓSi_{y}Co_{z})₁₃ (III)
avec
x un nombre de 0,7 à 0,95,
y un nombre de 0,05 à 1-x,
z un nombre de 0,005 à 0,5 ;
LaMnₓFe₂₋ₓGe (IV)
avec
x un nombre de 1,7 à 1,95, et
(3) les alliages de Heusler de type MnTP avec T = métal de transition et P = un métal à dopage p ayant un nombre d'électrons par atome e/a dans la plage allant de 7 à 8,5,
(4) les composés à base de Gd et Si de formule générale (V)
Gd₅(SiₓGe₁₋ₓ)₄ (V)
avec x = un nombre de 0,2 à 1,
(5) les composés à base de Fe₂P,
(6) les manganites de type perovskite,
(7) les composés contenant des éléments de terres rares de formule générale (VI) et (VII)
Tb₅(Si₄₋ₓGeₓ) (VI)
avec x = 0, 1, 2, 3, 4,
XTiGe (VII)
avec X = Dy, Ho, Tm,
(8) les composés à base de Mn et Sb ou As de formule générale (VIII) et (IX)
Mn₂₋ₓZₓSb (VIII)
Mn₂ZₓSb₁₋ₓ (IX)
avec
Z Cr, Cu, Zn, Co, V, As, Ge,
x 0,01 à 0,5,
Sb pouvant être remplacé par As si Z ne représente pas As,
les corps moulés comprenant des canaux pour le passage d'un milieu d'échange de chaleur fluide, **caractérisé en ce qu'**une poudre du matériau thermomagnétique est introduite dans un liant, le matériau de moulage résultant est appliqué sur un support par prototypage rapide/impression 3D, puis le liant et éventuellement le support sont éliminés, et le corps vert résultant est fritté et plusieurs matériaux thermomagnétiques différents sont imprimés les uns à côté des autres et/ou les uns sur les autres, de sorte que différents matériaux thermomagnétiques qui présentent un effet magnétocalorique à différentes températures soient présents dans le même corps moulé, l'agencement spatial des différents matériaux thermomagnétiques le long d'au moins un axe de l'espace ayant lieu de manière à obtenir le long dudit au moins un axe de l'espace une augmentation ou diminution quasi-continue de la température, à laquelle l'effet magnétocalorique se produit à chaque fois.

2. Procédé selon la revendication 1, **caractérisé en ce que** la poudre du matériau thermomagnétique présente une taille de particule moyenne dans la plage allant de 0,1 à 100 µm.

3. Procédé selon l'une quelconque des revendications 1 ou 2, **caractérisé en ce que** les canaux dans le corps moulé présentent un diamètre moyen dans la plage allant de 0,1 à 2 000 µm.

4. Procédé selon l'une quelconque des revendications 1 à 3, **caractérisé en ce que** les canaux sont configurés de manière à prévoir une ou plusieurs ouvertures d'entrée et de sortie pour le milieu d'échange de chaleur fluide, et les canaux sont agencés de manière à permettre une régulation en température essentiellement homogène du corps moulé.

5. Procédé selon l'une quelconque des revendications 1 à 4, **caractérisé en ce que** le matériau de moulage contient des additifs supplémentaires pour améliorer les propriétés mécaniques, la résistance à la corrosion et/ou la conductivité.
